# EUROPEAN PATENT APPLICATION

(11) **EP 4 712 034 A1**
(43) Date of publication of application: **18.03.2026**
(21) Application number: 24819558.8
(22) Date of filing: 04.06.2024
(51) Int. Cl.: G06T 19/00, G06V 10/10, G06T 7/10, G06T 19/20, G06F 40/279, G06F 40/40, G06F 16/9535, G06F 3/01, G06F 3/048

(54) **METHOD AND DEVICE FOR PROVIDING GUIDE TO USER BY USING AUGMENTED REALITY IMAGE**

(30) Priority: 09.06.2023 KR 20230074382
(71) Applicant: Samsung Electronics Co., Ltd., Suwon-si, Gyeonggi-do 16677 (KR)
(72) Inventor: KIM, Jeongwon, Suwon-si, Gyeonggi-do 16677 (KR); KOO, Bonkon, Suwon-si, Gyeonggi-do 16677 (KR); KIM, Doyoun, Suwon-si, Gyeonggi-do 16677 (KR); RYU, Jaeyeol, Suwon-si, Gyeonggi-do 16677 (KR); SHIN, Sunghwan, Suwon-si, Gyeonggi-do 16677 (KR)
(74) Representative: Appleyard Lees IP LLP
(86) International application number: PCT/KR2024/007648
(87) International publication number: WO 2024/253407

(57) **Abstract**

Provided is a method, performed by an augmented reality device, of providing a guide to a user. A method of operating an augmented reality device may include identifying an action for which a guide is to be provided to a user, obtaining, via a camera, a real-world scene image, generating an augmented reality video corresponding to the action, based on the real-world scene image, and providing the guide to the user by using the augmented reality video.

## Description

### Technical Field

The present disclosure relates to an augmented reality device and a method of operating the same, and more particularly, to a method and device for providing a user with a contextual guide reflecting a current situation, by using a real-time augmented reality video generated based on a real-world image.

### Background Art

Augmented reality (AR) technology is a technology that combines virtual objects or information with a real-world environment, making the virtual objects or information appear as if they were objects existing in the real physical environment. Modern computing and display technologies have enabled the development of systems for AR experiences, in which digitally reproduced images or portions thereof may be presented to a user in such a way that they are thought of or perceived as real.

AR technology may be used to overlay a virtual image onto a physical environmental space of the real world or onto a real-world object. With growing interest in AR technology, various technologies for implementing AR have been actively developed. AR devices (e.g., smart glasses) that utilize AR technology have been used in daily life for applications such as information retrieval, route guidance, or photography.

AR devices are daily-life devices capable of obtaining data from a user's view point, and in particular, smart glasses and the like may display a virtual video overlaid on an image of the real-world physical environment via a transparent display.

To effectively provide a contextual guide to a user in an AR environment where real-space objects and virtual objects coexist, an AR device needs to generate an AR video considering the real-world environment.

### Disclosure of Invention

### Solution to Problem

An aspect of the present disclosure provides a method, performed by an augmented reality device, of providing a guide to a user. A method of operating an augmented reality device may include identifying an action for which a guide is to be provided to a user. The method of operating the augmented reality device may include obtaining, via a camera, a real-world scene image. The method of operating the augmented reality device may include generating an augmented reality video corresponding to the action, based on the real-world scene image. The method of operating the augmented reality device may include providing the guide to the user by using the augmented reality video.

Another aspect of the present disclosure provides an augmented reality device for providing a guide to a user. The augmented reality device may include a camera configured to obtain a real-world scene image, a display unit, memory storing a program including at least one instruction, and at least one processor. The at least one processor may identify an action for which a guide is to be provided to the user, obtain, via the camera, the real-world scene image, generate an augmented reality video corresponding to the action, based on the real-world scene image, and provide the guide to the user by using the augmented reality video via the display unit.

Another aspect of the present disclosure provides a computer program product including a computer-readable storage medium. The storage medium may have stored therein instructions that are readable by an augmented reality device, and cause the augmented reality device to execute at least one of embodiments of the disclosed method.

### Brief Description of Drawings

FIG. 1 is a diagram for describing an operation, performed by an augmented reality device, of providing a guide to a user, according to an embodiment of the present disclosure.
FIG. 2 is a flowchart illustrating a method, performed by an augmented reality device, of providing a guide to a user, according to an embodiment of the present disclosure.
FIG. 3A is a diagram for describing an operation, performed by an augmented reality device, of providing a user with a guide for a basketball free throw action, according to an embodiment of the present disclosure.
FIG. 3B is a diagram for describing an operation, performed by an augmented reality device, of providing a user with a guide for a basketball free throw action, according to an embodiment of the present disclosure.
FIG. 4 is a diagram for describing an operation, performed by an augmented reality device, of providing a third-person viewpoint video, according to an embodiment of the present disclosure.
FIG. 5 is a diagram for describing an operation, performed by an augmented reality device, of providing a user with a guide for a cooking action, according to an embodiment of the present disclosure.
FIG. 6 is a diagram for describing an operation, performed by an augmented reality device, of providing a user with a guide for an assembly action, according to an embodiment of the present disclosure.
FIG. 7 is a block diagram illustrating components of an augmented reality device according to an embodiment of the present disclosure.
FIG. 8 is a diagram illustrating a glasses-type augmented reality device according to an embodiment of the present disclosure.

### Mode for the Invention

Hereinafter, embodiments of the present disclosure will be described in detail with reference to the accompanying drawings for those of skill in the art to be able to implement the embodiments without any difficulty. The present disclosure may, however, be embodied in many different forms and should not be construed as being limited to embodiments set forth herein. In addition, in order to clearly describe the present disclosure, portions that are not relevant to the description of the present disclosure are omitted, and similar reference numerals are assigned to similar elements throughout the specification.

Although the terms used herein for describing embodiments of the present disclosure are selected from among common terms that are currently widely used in consideration of their function in the present disclosure, the terms may be different according to an intention of those of ordinary skill in the art, a precedent, or the advent of new technology. Also, in particular cases, the terms are discretionally selected by the applicant of the present disclosure, in which case, the meaning of those terms will be described in detail in the corresponding embodiment. Therefore, the terms used herein are not merely designations of the terms, but the terms are defined based on the meaning of the terms and content throughout the present disclosure.

The singular expression may also include the plural meaning as long as it is not inconsistent with the context. All the terms used herein, including technical and scientific terms, may have the same meanings as those generally understood by those of skill in the art related to the present specification.

Throughout the present disclosure, when a part "includes" an element, it is to be understood that the part may additionally include other elements rather than excluding other elements as long as there is no particular opposing recitation. In addition, as used herein, the terms such as "...er", "...or", "... unit", "... module", etc., denote a unit that performs at least one function or operation, which may be implemented as hardware or software or a combination thereof.

Throughout the specification, when a part is referred to as being "connected to" another part, it may be "directly connected to" the other part or be "electrically connected to" the other part through an intervening element. In addition, when an element is referred to as "including" a component, the element may additionally include other components rather than excluding other components as long as there is no particular opposing recitation.

As used herein, the expression "configured to" may be interchangeably used with, for example, "suitable for", "having the capacity to", "designed to", "adapted to", "made to", or "capable of", according to a situation. The expression "configured to" may not imply only "specially designed to" in a hardware manner. Instead, in a certain circumstance, the expression "a system configured to" may indicate the system "capable of" together with another device or components. For example, "a processor configured (or set) to perform A, B, and C" may imply a dedicated processor (e.g., an embedded processor) for performing a corresponding operation or a generic-purpose processor (e.g., central processing unit (CPU) or an application processor) capable of performing corresponding operations by executing one or more software programs stored in memory.

A function related to artificial intelligence (AI) according to the present disclosure is operated via a processor and memory. The processor may include one or more processors. In this case, the one or more processors may be a general-purpose processor, such as a central processing unit (CPU), an application processor (AP), or a digital signal processor (DSP), a dedicated graphics processor such as a graphics processing unit (GPU) or a vision processing unit (VPU), or a dedicated Al processor such as a neural processing unit (NPU). The one or more processors perform control to process input data according to predefined operation rules or an Al model stored in the memory. In a case in which the one or more processors are dedicated Al processors, the dedicated Al processor may be designed with a hardware structure specialized for processing a particular Al model.

The predefined operation rules or Al model is generated via a training process. Here, being generated via a training process may mean that predefined operation rules or Al model set to perform desired characteristics (or purposes), is generated by training a basic Al model (or deep learning model) by using a learning algorithm that utilizes a large amount of training data. The training process may be performed by a device itself on which Al according to the present disclosure is performed, or by a separate server and/or system. Examples of learning algorithms may include, for example, supervised learning, unsupervised learning, semi-supervised learning, and reinforcement learning, but are not limited thereto.

An 'AI model' (or a 'deep learning model') may include a plurality of neural network layers. Each of the neural network layers has a plurality of weight values, and performs a neural network arithmetic operation via an arithmetic operation between an arithmetic operation result of a previous layer and the plurality of weight values. The plurality of weight values in each of the plurality of neural network layers may be optimized as a result of training the Al model. For example, the plurality of weight values may be modified to reduce or minimize a loss or cost value obtained by the Al model during a training process. The AI network may include, for example, a deep neural network (DNN) and may include, for example, a convolutional neural network (CNN), a recurrent neural network (RNN), a restricted Boltzmann machine (RBM), a deep belief network (DBN), a bidirectional recurrent deep neural network (BRDNN), a deep Q-network, and the like, but is not limited thereto.

In the present disclosure, 'augmented reality' refers to displaying a virtual image within a physical space of the real world or displaying a real-world object together with a virtual image.

In the present disclosure, an 'augmented reality device' refers to a device capable of presenting augmented reality, and may be, for example, augmented reality glasses resembling eyeglasses that are worn on a user's face, a head-mounted display (HMD) apparatus or an augmented reality helmet that is worn on a user's head, or the like.

In the present disclosure, an 'action' refers to a set of at least one behavior of a user. An action may be expressed in a sentence structure, and may be identified by a subject (the entity performing the action), an object (the target of the action), and a predicate (the type of the action). In an embodiment of the present disclosure, information about an action may include identification information about one or more detailed actions having a temporal relationship, and information about the execution order (sequence) of the one or more detailed actions. In an embodiment of the present disclosure, an action may include a user's behavior according to an instruction manual, a user's cooking behavior according to a recipe, or the like.

In the present disclosure, a 'video' or an 'image sequence' may refer to a moving picture or a motion picture. A video or an image sequence may include a series of still pictures having a temporal relationship.

In the present disclosure, a 'video frame' or an 'image' may refer to a single still image output on a display. That is, in a video that creates a moving picture by displaying consecutive scenes at short time intervals, a video frame or an image may refer to a single frame of each scene.

Hereinafter, the present disclosure will be described in detail with reference to the accompanying drawings.

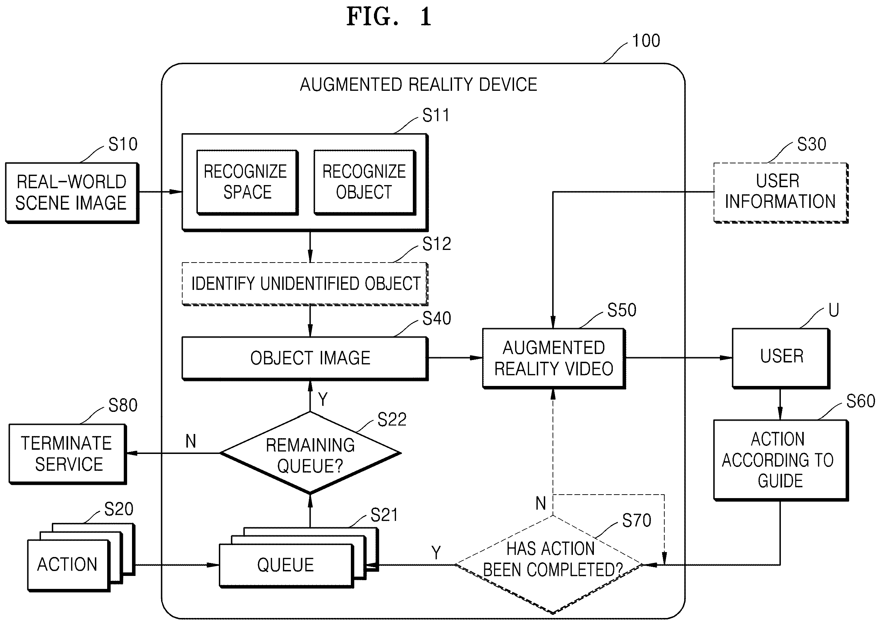

FIG. 1 is a diagram for describing an operation, performed by an augmented reality device 100, of providing a guide to a user U, according to an embodiment of the present disclosure.

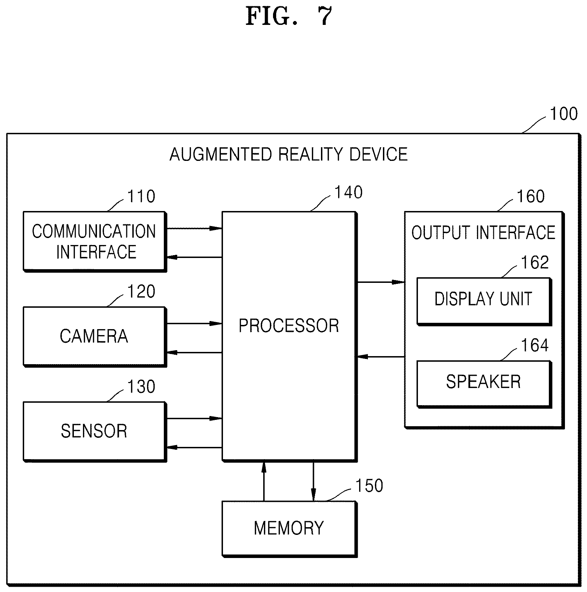

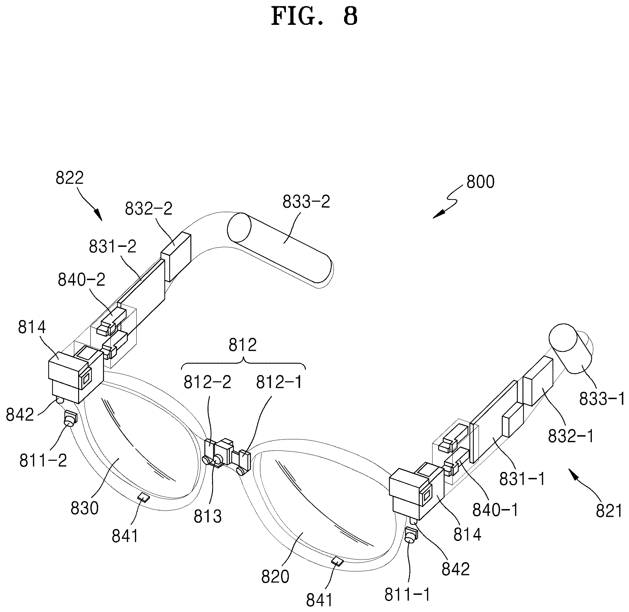

The augmented reality device 100 is a device capable of presenting augmented reality and may be configured, for example, as augmented reality glasses in the shape of eyeglasses to be worn on the face of the user U. Alternatively, the augmented reality device 100 may be implemented as an HMD apparatus or an augmented reality helmet to be worn on the head of the user U, or the like. Components of the augmented reality device 100 will be described in more detail below with reference to FIGS. 7 and 8.

In operation S10, the augmented reality device 100 may obtain a real-world scene image. In an embodiment, the augmented reality device 100 may include a camera that photographs a background, an object, and a part of the user's body in a real-world space when the user U wears the augmented reality device 100 on the head, and the augmented reality device 100 may obtain a real-world scene image via the camera. For example, the augmented reality device 100 may obtain an image by using the camera to photograph an object and a part of the user's body (e.g., the user's hands or legs) included in a real-world space. In an embodiment, the augmented reality device 100 may include a single camera, or may include two cameras corresponding respectively to the left eye and the right eye of the user U.

In operation S11, the augmented reality device 100 may recognize, from the obtained real-world scene image, a space in which the user U is currently located, and recognize an object within the user's field of view (FoV). An AI model may be used for the operation in which the augmented reality device 100 recognizes, from a real-world scene image, an object of a real-world space or a real world. The Al model may be a model trained to output at least one object image through inference by using, as an input value, a real-world scene image captured by a camera.

In an embodiment of the present disclosure, an 'AI model' may include a deep neural network model that is trained to detect at least one object from input image data. The deep neural network model may be, for example, a CNN model. However, the present disclosure is not limited thereto, and the deep neural network model may include, for example, at least one of an RNN model, an RBM, a DBN, a BRDNN, or a deep Q-network, but is not limited thereto.

In an embodiment, the augmented reality device 100 may perform segmentation on a real-world scene image according to the shape, position, type, etc., of objects. For example, the augmented reality device 100 may segment a real-world scene image by using a panoptic segmentation technique that obtains unique identification information of an object. Image segments resulting from the segmentation may each represent a single object. An image segment corresponding to a single object may be referred to as an 'object image'.

In an embodiment, the augmented reality device 100 may identify, from a segmented real-world scene image, at least one object image related to an action. For example, from among the object images included in a real-world scene image, the augmented reality device 100 may determine, as an object image of interest, an object image that is related to an action for which a guide is to be provided to the user U. The real-world scene image obtained by the augmented reality device 100 may include a plurality of object images. Not all of the object images included in the real-world scene image may be related to an action for which a guide is to be provided to the user. For example, only objects corresponding to some of the object images included in the real-world scene image may be related to an action for which a guide is to be provided to the user. The augmented reality device 100 may determine an object image of interest from the real-world scene image according to identification information of an action for which a guide is to be provided. For example, the augmented reality device 100 may determine, as object images of interest, an object image corresponding to a subject that performs an action for which a guide is to be provided, and an object image corresponding to a target object.

In operation S12, when an unidentified object is included in the obtained real-world scene image, or when an object necessary to guide the user U through an action is unidentified, the augmented reality device 100 may output a confirmation request message asking the user U to identify the unidentified object. Operation S12 may be optionally included in the method, performed by the augmented reality device 100, of providing a guide to the user U, according to an embodiment of the present disclosure.

In an embodiment, at least one object image related to an action for which a guide is to be provided may not be identified from the segmented real-world scene image. For example, an object image corresponding to a target object of an action for which a guide is to be provided may not be detected from the real-world scene image. In this case, the augmented reality device 100 may output a confirmation request message asking for confirmation of whether an unidentified object exists within the real-world scene image and confirmation of position information of the unidentified object.

In an embodiment, the segmented real-world scene image may also include an object image corresponding to an object that the augmented reality device 100 cannot identify. For example, in an embodiment of providing a guide for a cooking action according to a recipe, a real-world scene image may include an object image for which the augmented reality device 100 cannot determine whether the corresponding object is 'salt' or 'sugar'. In this case, the augmented reality device 100 may output a confirmation request message asking the user to identify the object to which the unidentified object corresponds.

In operation S20, the augmented reality device 100 may identify an action for which a guide is to be provided to the user U.

In an embodiment, the identifying of the action for which a guide is to be provided to the user U may be receiving information related to an action from a server connected to the augmented reality device 100 by wireless communication or the like. For example, the augmented reality device 100 may obtain, via a server, an image including information related to an action for which a guide is to be provided, such as an instruction manual or a recipe. The instruction manual or the recipe may include text related to the action. The augmented reality device 100 may perform natural language processing (NLP) on text received via the server to interpret the content of the text as information, and identify an action for which a guide is to be provided to the user U, based on the interpreted information.

An Al model may be used in the operation, performed by the augmented reality device 100, of receiving information related to an action from the server. The Al model may be a model trained to output at least one action through inference by using, as an input value, an image received from a server.

In an embodiment, the identifying of the action for which a guide is to be provided to the user U may be obtaining information related to the action via a camera included in the augmented reality device 100. For example, the augmented reality device 100 may obtain, via a camera, an image including information related to an action for which a guide is to be provided, such as an instruction manual, a recipe, a Quick Response (QR) code, or a barcode. The instruction manual or the recipe may include text related to the action. The augmented reality device 100 may perform NLP on text in an image captured by the camera to interpret the content of the text as information, and identify an action for which a guide is to be provided to the user U, based on the interpreted information.

An Al model may be used in the operation, performed by the augmented reality device 100, of obtaining information related to an action via a camera. The Al model may be a model trained to output at least one action through inference by using, as an input value, an image obtained via a camera.

In an embodiment, the identifying of the action for which a guide is to be provided to the user may be obtaining information related to the action that is pre-stored in memory of the augmented reality device 100. For example, the augmented reality device 100 may store information related to an action for which a guide is to be provided to the user, such as an instruction manual or a recipe. In this case, the augmented reality device 100 may identify an action for which a guide is to be provided, by loading information stored in the memory.

For example, the augmented reality device 100 may obtain an image including information related to an action for which a guide is to be provided, which is pre-stored in the memory, such as an instruction manual or a recipe. The instruction manual or the recipe may include text related to the action. The augmented reality device 100 may perform NLP on the text to interpret the content of the text as information, and identify an action for which a guide is to be provided to the user U, based on the interpreted information.

An Al model may be used in the operation, performed by the augmented reality device 100, of retrieving information related to an action, which is pre-stored in the memory. The Al model may be a model trained to output at least one action through inference by using, as an input value, an image obtained from memory.

In an embodiment, an action for which a guide is to be provided to the user U by the augmented reality device 100 may include a sequence of a plurality of detailed actions having a temporal relationship. For example, an action for which a guide is to be provided to the user U by the augmented reality device 100 may be a single continuous action or may include a set of a plurality of detailed actions.

In operation S21, a plurality of detailed actions may be included in a queue according to a temporal relationship. When the augmented reality device 100 identifies an action for which a guide is to be provided to the user U, the identified detailed actions are added to a queue according to a temporal relationship. Thereafter, while a guide providing service is being performed, the queue may include detailed actions that are to be performed after a detailed action corresponding to an augmented reality video currently being generated and provided to the user U.

In operation S22, the augmented reality device 100 may determine whether there are any remaining detailed actions in the queue. When it is determined that there are no remaining detailed actions in the queue, the guide providing service of the augmented reality device 100 is terminated (operation S80), and when it is determined that there is any remaining detailed action in the queue, the process proceeds to generating an augmented reality video for the next detailed action.

In operation S40, the augmented reality device 100 may determine, as an object image of interest, an object image corresponding to the action for which a guide is to be provided, from among object images obtained from the real-world scene image. For example, the augmented reality device 100 may select an object image corresponding to the subject of the action for which a guide is to be provided, and an object image corresponding to the target object of the action for which a guide is to be provided, by matching the object images included in the real-world scene image with the subject or the target object of the action.

In operation S50, the augmented reality device 100 may generate an augmented reality video based on the real-world scene image and the action for which a guide is to be provided to the user. For example, based on the object image corresponding to the subject of the action for which a guide is to be provided, and an object image corresponding to the target object of the action for which a guide is to be provided, the augmented reality device 100 may generate an augmented reality video (virtual video) according to the type of the action for which a guide is to be provided. That is, the augmented reality device 100 may generate an augmented reality video corresponding to the action based on the real-world scene image, and the generated augmented reality video may be used to provide a guide to the user. For example, the augmented reality video may be rendered and output via a display included in the augmented reality device 100.

In an embodiment, the augmented reality device 100 may generate an augmented reality video corresponding to an action based on position information of at least one object image within the real-world scene image.

In an embodiment, the viewpoint of the augmented reality video may be a first-person viewpoint or a third-person viewpoint. For example, when an augmented reality video for providing a guide for a particular action is from a third-person viewpoint, the augmented reality device 100 may control a display unit to display a video showing another person or user performing the corresponding action as viewed from a third-person perspective.

In operation S30, the augmented reality device 100 may obtain user information related to the user U. Operation S30 may be optionally included in the method, performed by the augmented reality device 100, of providing a guide to the user U, according to an embodiment of the present disclosure. The user information may include, for example, at least one of a height, an arm length, a weight, a dominant hand, or information about a physical disability of the user U, but is not limited thereto.

When the augmented reality device 100 has obtained user information related to the user U, the augmented reality device 100, when generating the augmented reality video in operation S50, may generate the augmented reality video corresponding to the action for which a guide is to be provided, based on the real-world scene image and the obtained user information.

In an embodiment, the operation, performed by the augmented reality device 100, of obtaining user information related to the user U may be obtaining user information related to the user U via a sensor. For example, a sensor for obtaining user information may include, but is not limited to, at least one of an eye-tracking sensor, an inertial measurement unit (IMU) sensor, a heart rate sensor, and a global positioning system (GPS) sensor.

In an embodiment, the operation, performed by the augmented reality device 100, of obtaining user information related to the user U may be obtaining user information related to the user U that is pre-stored in memory of the augmented reality device 100. For example, the augmented reality device 100 may store user information related to the user U. In this case, the augmented reality device 100 may obtain the user information by loading information stored in the memory.

In operation S60, the user U of the augmented reality device 100 may perform an actual action according to the provided guide.

In operation S70, after providing the user U with a guide for a particular action by using the augmented reality video generated in operation S50, the augmented reality device 100 may determine whether the user U has completed performing the action for which the guide has been provided. Operation S70 may be optionally included in the method, performed by the augmented reality device 100, of providing a guide to the user U, according to an embodiment of the present disclosure.

In an embodiment, when it is determined that the user U has not completed performing the action for which the guide has been provided, the augmented reality device 100 may wait for the user U to complete performing the corresponding action (proceeding again to operation S70), or may repeatedly output the generated augmented reality video (proceeding to operation S50). In an embodiment, the augmented reality video may be repeatedly output the generated augmented reality video at regular intervals until the user U completes performing the corresponding action. In an embodiment, the augmented reality video may also be output again only when there is a re-output instruction from the user U.

In an embodiment, when it is determined that the user U has completed performing the action for which the guide has been provided, the method proceeds to operations S21 and S22 such that the augmented reality device 100 may determine whether there are any remaining detailed actions in the queue.

When there is any remaining detailed action in the queue, the method proceeds to operation S40 such that the augmented reality device 100 generates an augmented reality video for providing a guide for the next detailed action. To generate an augmented reality video for the next detailed action, the augmented reality device 100 may obtain an updated real-time real-world scene image again. By newly obtaining a real-world scene image for each detailed action, the augmented reality device 100 may provide the user with a contextual guide that reflects a real-time real-world scene image.

When there are no remaining detailed actions in the queue, the method proceeds to operation S80. In operation S80, the augmented reality device 100 may terminate the service of providing a guide to the user.

As described above, according to an embodiment of the present disclosure, in an augmented reality environment where objects of a real-world space and virtual objects coexist, a contextual guide may be effectively provided to the user U by generating an augmented reality video that considers the real-world environment in real time, and providing the augmented reality video to the user U.

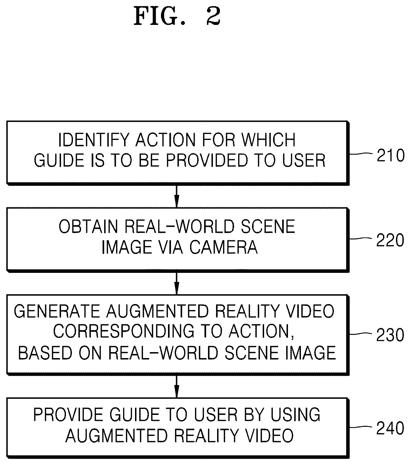

FIG. 2 is a flowchart illustrating a method, performed by an augmented reality device, of providing a guide to a user, according to an embodiment of the present disclosure.

In operation 210, the augmented reality device identifies an action for which a guide is to be provided to a user. Operation 210 may correspond to operation S20 of FIG. 1 described above.

In an embodiment, the identifying of the action for which a guide is to be provided to the user may include receiving information related to the action from a server, obtaining information related to the action via a camera, or obtaining information related to the action that is pre-stored in memory.

In an embodiment, the identifying of the action for which a guide is to be provided to the user may include obtaining an image including text related to the action, and performing NLP on the obtained image to identify the action for which a guide is to be provided to the user.

In an embodiment, an action for which a guide is to be provided to a user may include a sequence of a plurality of detailed actions having a temporal relationship.

In operation 220, the augmented reality device obtains a real-world scene image via a camera. Operation 220 may correspond to operation S10 of FIG. 1 described above.

In operation 230, the augmented reality device generates an augmented reality video corresponding to the action, based on the real-world scene image. Operation 230 may correspond to operations S40 to S50 of FIG. 1 described above.

In an embodiment, the generating of the augmented reality video corresponding to the action based on the real-world scene image may include segmenting the real-world scene image, identifying, from the segmented real-world scene image, at least one object image related to the action, and generating the augmented reality video corresponding to the action, based on position information of the at least one object image within the real-world scene image.

In an embodiment, the method may further include, when at least one object image related to the action is not identified from the segmented real-world scene image, outputting a request message for confirmation of unidentified object information.

In an embodiment, the method may further include obtaining user information related to a user of the augmented reality device. The generating of the augmented reality video may be generating an augmented reality video corresponding to the action, based on the real-world scene image and the user information.

In an embodiment, the obtaining of the user information related to the user may include obtaining the user information related to the user via a sensor, or obtaining the user information related to the user that is pre-stored in memory.

In an embodiment, the user information may include, but is not limited to, at least one of a height, an arm length, a weight, a dominant hand, or information about a physical disability of the user.

In operation 240, the augmented reality device provides a guide to the user by using the augmented reality video. Operation 240 may correspond to operations S50 to S70 of FIG. 1 described above.

In an embodiment, the providing of the guide to the user by using the augmented reality video may include determining whether the user has completed performing the action for which the guide has been provided, and when it is determined that the user has not completed performing the action, repeatedly outputting the augmented reality video at regular intervals.

In an embodiment, the viewpoint of the augmented reality video may be a first-person viewpoint or a third-person viewpoint. For example, when an augmented reality video for providing a guide for a particular action is from a third-person viewpoint, the augmented reality device may control a display unit to display a video showing another person or user performing the corresponding action as viewed from a third-person perspective.

The augmented reality device according to the present disclosure may provide a user with an adaptive contextual guide that is flexibly generated according to an actual situation, by generating an augmented reality video that considers a real-world environment in real time and providing the augmented reality video to the user.

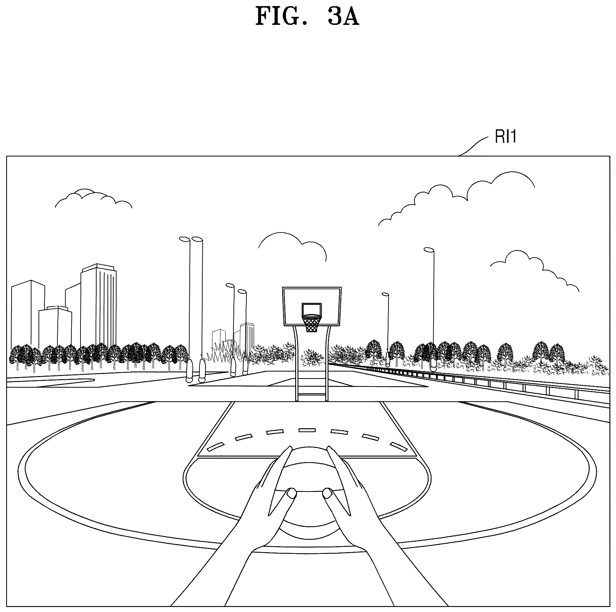

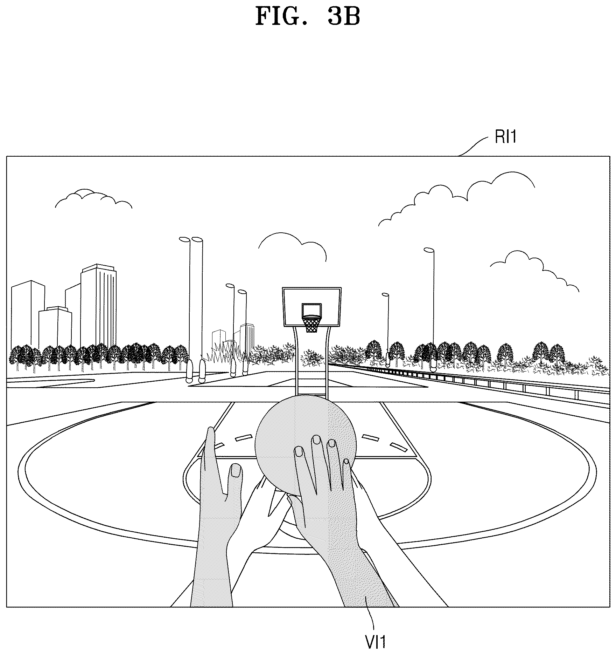

FIGS. 3A and 3B are diagrams for describing an operation, performed by an augmented reality device, of providing a user with a guide for a basketball free throw action, according to an embodiment of the present disclosure.

Referring to FIG. 3A, the augmented reality device may obtain a real-world scene image RI1 via a camera. The real-world scene image RI1 may include information about a background, an object image of a ball, and an object image of a user's hands. The augmented reality device may identify an action for which a guide is to be provided to the user. In the embodiment of FIG. 3A, the action for which a guide is to be provided to the user may be a free throw action. Detailed actions for the free throw method may be downloaded by the user from an Internet environment or may be received from a server.

In an embodiment, the augmented reality device may additionally obtain user information such as the user's dominant hand. The user information may be used to generate an augmented reality video.

Referring to FIG. 3B, an augmented reality video VI1 for a guide for a 'free throw action' may be displayed on the real-world scene image RI1 that the user perceives through the augmented reality device. The augmented reality video VI1 may be generated based on pieces of information obtained through the real-world scene image, such as the actual shape of the user's hand and the actual position of the ball for the free throw action.

Accordingly, it is possible to provide the user with a more realistic guide, and a more effective guide may be provided compared to a case where the user learns a free throw method through text or a case where the user learns a free throw method by imitating another person's free throw action.

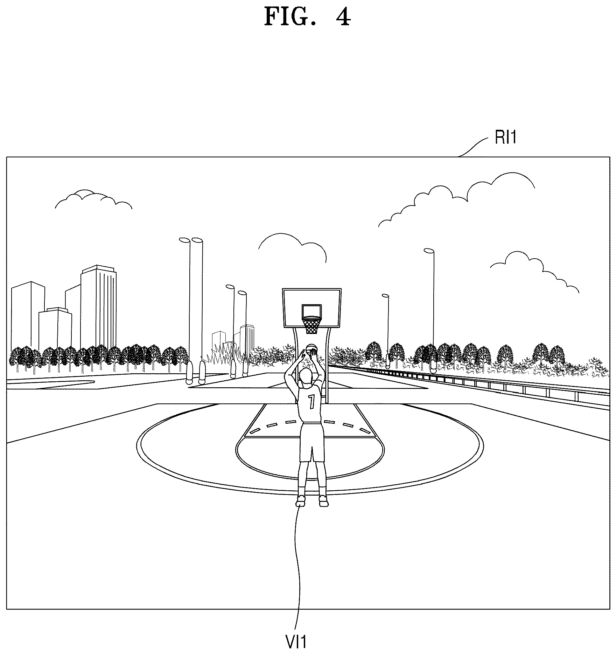

FIG. 4 is a diagram for describing an operation, performed by an augmented reality device, of providing a third-person viewpoint video, according to an embodiment of the present disclosure.

The viewpoint of the augmented reality video VI1 may be a first-person viewpoint as illustrated in FIG. 3B, or may be a third-person viewpoint as illustrated in FIG. 4. For example, when the augmented reality video VI1 for providing a guide for a particular action is from a third-person viewpoint, the augmented reality device may control a display unit to display a video showing another person or user performing the corresponding action as viewed from a third-person perspective.

In the embodiment of FIG. 4, the action for which a guide is to be provided to the user may be a free throw method. Detailed actions for the free throw method may be downloaded by the user from an Internet environment or may be received from a server.

In an embodiment, the augmented reality device may additionally obtain user information such as the user's dominant hand. The user information may be used to generate the third-person viewpoint augmented reality video VI1.

Referring to FIG. 4, the third-person viewpoint augmented reality video VI1 for a guide for a 'free throw action' may be displayed on the real-world scene image RI1 that the user perceives through the augmented reality device. Accordingly, it is possible to provide a more realistic guide to the user, and a more effective guide may be provided compared to a case where the user learns a free throw method through text.

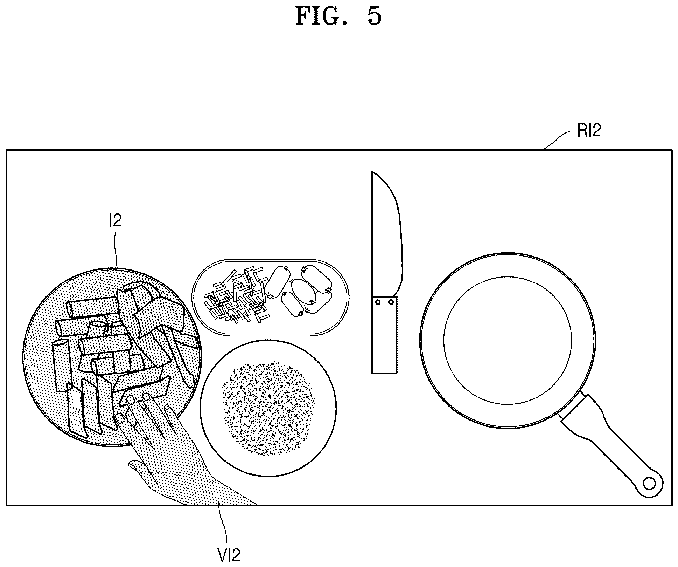

FIG. 5 is a diagram for describing an operation, performed by an augmented reality device, of providing a user with a guide for a cooking action, according to an embodiment of the present disclosure.

Referring to FIG. 5, the augmented reality device may obtain a real-world scene image RI2 via a camera. The real-world scene image RI2 may include information about what ingredients are arranged where on a kitchen counter, and information about what cooking utensils are arranged where. The augmented reality device may identify an action for which a guide is to be provided to the user. In the embodiment of FIG. 5, the action for which a guide is to be provided to the user may be a method of preparing Tteokbokki according to a recipe. Detailed actions for the method of preparing Tteokbokki may be downloaded by the user from an Internet environment, may be received from a server, or may be identified from an image of a 'Tteokbokki preparation recipe' in text that is captured by the user.

In an embodiment, the augmented reality device may additionally obtain user information such as the user's dominant hand. The user information may be used to generate an augmented reality video, for example, to provide a guide for which hand to use to hold a cooking tool.

Referring to FIG. 5, an augmented reality video VI2 for a guide for a 'method of preparing Tteokbokki' may be displayed on the real-world scene image RI2 that the user perceives through the augmented reality device. The augmented reality video VI2 may be generated based on pieces of information obtained through the real-world scene image, such as the actual shape of the user's hand and the actual positions of the respective ingredients. The augmented reality video VI2 may be generated to induce an actual action of the user, but may also be generated in the form of an indicator I2 that indicates where an ingredient necessary for the next action is located.

Accordingly, it is possible to provide a more accurate and helpful guide to the user, and a more effective guide may be provided compared to a case where the user cooks while reading a text recipe.

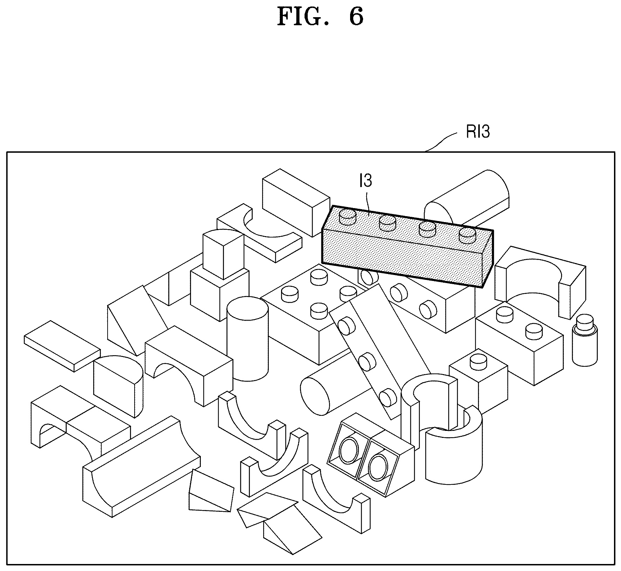

FIG. 6 is a diagram for describing an operation, performed by an augmented reality device, of providing a user with a guide for an assembly action, according to an embodiment of the present disclosure.

Referring to FIG. 6, the augmented reality device may obtain a real-world scene image RI3 via a camera. The real-world scene image RI3 may include information about what components are arranged where on a workbench, and information about what stage the current assembly has progressed to. The augmented reality device may identify an action for which a guide is to be provided to the user. In the embodiment of FIG. 6, the action for which a guide is to be provided to the user may be a method of assembling a toy according to an instruction manual. Detailed actions for the method of assembling a toy may be downloaded by the user from an Internet environment, may be received from a server, or may be identified from an image of a 'toy assembly instruction manual' in text that is captured by the user.

In an embodiment, the augmented reality device may additionally obtain user information such as the user's dominant hand. The user information may be used to generate an augmented reality video, for example, to provide a guide for which hand to use to hold a component.

Referring to FIG. 6, an augmented reality video for a guide for a 'method of assembling a toy' may be displayed on the real-world scene image RI3 that the user perceives through the augmented reality device. The augmented reality video may be generated based on pieces of information obtained through the real-world scene image, such as the actual shape of the user's hand and the actual positions of the respective components. The augmented reality video may also be generated in the form of an indicator 13 that indicates where a component necessary for the next action is located.

Accordingly, it is possible to provide a more accurate and helpful guide to the user, and a more effective guide may be provided compared to a case where the user assembles a toy while reading an instruction manual in text.

FIG. 7 is a block diagram illustrating components of the augmented reality device 100 according to an embodiment of the present disclosure.

Referring to FIG. 7, the augmented reality device 100 may include a communication interface 110, a camera 120, a sensor 130, a processor 140, memory 150, and an output interface 160. The communication interface 110, the camera 120, the sensor 130, the processor 140, the memory 150, and the output interface 160 may be electrically and/or physically connected to each other. However, components of the augmented reality device 100 are not limited to those illustrated in FIG. 7. The augmented reality device 100 may be implemented with more components than those illustrated in FIG. 7, and the augmented reality device 100 may be implemented with fewer components than those illustrated in FIG. 7.

In an embodiment of the present disclosure, the augmented reality device 100 may be implemented as augmented reality glasses to be worn on a user's head, and in this case, the augmented reality device 100 may further include a power supply unit (e.g., a battery) that supplies driving power to the communication interface 110, the camera 120, the sensor 130, the processor 140, and the output interface 160. In an embodiment, the augmented reality device 100 may not include a speaker 164.

The communication interface 110 is configured to transmit and receive data to and from a server or an external device via a wired or wireless communication network. In an embodiment, the communication interface 110 may perform data communication with a server or an external device by using at least one of data communication schemes including, for example, wired local area network (LAN), wireless LAN, Wi-Fi, Bluetooth, ZigBee, Wi-Fi Direct (WFD), Infrared Data Association (IrDA), Bluetooth Low Energy (BLE), near-field communication (NFC), wireless broadband internet (WiBro), Worldwide Interoperability for Microwave Access(WiMAX), Shared Wireless Access Protocol (SWAP), Wireless Gigabit Alliance (WiGig), and radio-frequency (RF) communication. However, the present disclosure is not limited thereto, and in a case where the augmented reality device 100 is implemented as a wearable device such as smart glasses, the communication interface 110 may also transmit and receive data to and from a server or an external device via a network that follows mobile communication standards, such as communication methods using code-division multiple access (CDMA), wideband CDMA (WCDMA), 3G, 4G (Long-Term Evolution (LTE)), 5G Sub-6, and/or millimeter wave (mmWave).

In an embodiment, under control of the processor 140, the communication interface 110 may receive, from a server, information related to an action for which a guide is to be provided to a user. The communication interface 110 may provide the processor 140 with information related to the action. The information related to the action may include data such as text, images, or videos.

In an embodiment, the communication interface 110 may be connected to an external device via a short-range communication method such as Bluetooth or Wi-Fi Direct, and may receive, from the external device, various pieces of information, such as information related to an action for which a guide is to be provided to a user.

The camera 120 is configured to obtain two-dimensional (2D) image data by photographing a real-world space and a part of a user's body (e.g., the user's hands, arms, or legs). The camera 120 may be implemented in a small form factor to be mounted on the augmented reality device 100, and may be a lightweight red-green-blue (RGB) camera that consumes low power. However, the present disclosure is not limited thereto, and in an embodiment of the present disclosure, the camera 120 may be implemented as any known type of camera, such as an RGB-depth camera having a depth estimation function, a dynamic vision sensor camera, a stereo fisheye camera, a grayscale camera, or an infrared camera. In an embodiment, the camera 120 may be arranged to face the user, and may also be configured to photograph the user's face.

The camera 120 may include a lens module, an image sensor, and an image processing module. The camera 120 may obtain a still image or a video related to a real-world object or a part of a user's body by using an image sensor (e.g., a complementary metal-oxide-semiconductor (CMOS) or a charge-coupled device (CCD)). The video may include a plurality of image frames obtained in real time by photographing a part of the user's body interacting with a real-world object via the camera 120. The image processing module may encode a still image consisting of a single image frame or video data consisting of a plurality of image frames obtained through the image sensor, and deliver a result of the encoding to the processor 140.

The sensor 130 may include sensors configured to detect a real-world space, a position, a situation, or user information. In an embodiment of the present disclosure, the sensor 130 may include, but is not limited to, at least one of an eye-tracking sensor, an IMU sensor, a heart rate sensor, or a GPS sensor.

The processor 140 may execute one or more instructions of a program stored in the memory 150. The processor 140 may include a hardware component configured to perform arithmetic, logic, and input/output operations, and image processing. Although FIG. 7 illustrates that the processor 140 is a single unit, the present disclosure is not limited thereto, and the processor 140 may include one or more elements. The processor 140 may be a general-purpose processor such as a CPU, an AP, or a DSP, may be a dedicated graphics processor such as a GPU or a VPU, or may be a dedicated Al processor such as an NPU. The processor 140 may perform control to process input data according to predefined operation rules or an Al model. Alternatively, in a case where the processor 140 is a dedicated Al processor, the dedicated Al processor may be designed with a hardware structure specialized for processing a particular Al model.

The memory 150 may include, for example, at least one of a flash memory-type storage medium, a hard disk-type storage medium, a multimedia card micro-type storage medium, a card-type memory (e.g., Secure Digital (SD) or eXtreme Digital (XD) memory), random-access memory (RAM), static RAM (SRAM), read-only memory (ROM), electrically erasable programmable ROM (EEPROM), programmable ROM (PROM), a magnetic memory, a magnetic disc, or an optical disc.

The memory 150 may store instructions related to a function and/or an action for the augmented reality device 100 to provide a guide to a user. In an embodiment, the memory 150 may store at least one of instructions, an algorithm, a data structure, program code, or an application program that is readable by the processor 140. The instructions, the algorithm, the data structure, and the program code stored in the memory 150 may be implemented in a programming or scripting language, for example, C, C++, Java, or an assembler.

The processor 140 may execute instructions or pieces of program code stored in the memory 150, and may control the overall operation of the augmented reality device 100. The processor 140 may perform operations according to an embodiment of the present disclosure. For example, the processor 140 may execute programs stored in the memory 150 to control the overall operation of the communication interface 110, the camera 120, the sensor 130, and the output interface 160.

The processor 140 may include a hardware component configured to perform arithmetic operations, logic operations, input/output operations, and signal processing. For example, the processor 140 may include at least one of a CPU, a microprocessor, a graphics processing unit, an application-specific integrated circuit (ASIC), a DSP, a digital signal processing device (DSPD), a programmable logic device (PLD), and a field-programmable gate array (FPGA), but is not limited thereto.

In an embodiment, by executing one or more instructions stored in the memory 150, the processor 140 may identify an action for which a guide is to be provided to a user, obtain a real-world scene image via a camera, generate an augmented reality video corresponding to the action, based on the real-world scene image, and provide a guide to the user via the output interface 160 by using the augmented reality video.

The output interface 160 is configured to output an augmented reality video (a virtual video) for a guide or to output an audio signal, under control of the processor 140. The output interface 160 may include a display unit 162 and the speaker 164.

The display unit 162 may include at least one of a liquid-crystal display, a thin-film-transistor liquid-crystal display, an organic light-emitting diode, a flexible display, a three-dimensional (3D) display, and an electrophoretic display.

In an embodiment, in a case where the augmented reality device 100 is configured as augmented reality glasses, the display unit 162 may be configured as a lens optical system and may include a waveguide and an optical engine. The optical engine may be configured as a projector that generates light of an augmented reality video including text, icons, or virtual images, and the like, and projects the light to the waveguide. The optical engine may include, for example, an image panel imaging panel, an illumination optical system, a projection optical system, and the like. In an embodiment, the optical engine may be arranged in a frame or temples of the augmented reality glasses.

The speaker 164 is configured to output an audio signal. In an embodiment, the speaker 164 may output a voice message or a notification sound to supplement a guide, under control of the processor 140.

FIG. 8 is a diagram illustrating a glasses-type augmented reality device 800 according to an embodiment of the present disclosure.

FIG. 8 illustrates an augmented reality device 800 that may measure a user's visual acuity and provide vision correction based on the measured visual acuity. The augmented reality device 800 is a device capable of displaying augmented reality (AR), and may generally include AR glasses in the shape of eyeglasses to be worn on a user's face, an HMD, a virtual reality headset (VRH), or an AR helmet to be worn on a user's head, or the like. In the case of an HMD apparatus, by arranging a display in front of the user's eyes, it is possible to provide an extra-large screen to the user, and a realistic virtual world may be provided because the screen moves according to the user's movement.

In an embodiment, the user may wear the AR device 800, which may display visual extended reality content. The AR device 800 may include an audio module capable of providing audio extended reality content to the user. In an embodiment, the AR device 800 may include one or more cameras capable of capturing images and videos of an environment. The AR device 800 may include an eye-tracking system to determine a vergence distance of a user. In an embodiment, the AR device 800 may include a lightweight HMD (e.g., goggles, glasses, or a visor). In an embodiment, the AR device 800 may include a device such as a lightweight portable display device or one or more laser projection glasses (e.g., glasses capable of projecting a low-powered laser onto a user's retina to project and display an image or depth content to the user).

In an embodiment, the AR device 800 may provide an AR service that outputs at least one virtual object such that the virtual object appears superimposed on an area determined to be the user's FoV. For example, the area determined to be the user's FoV may be an area that is determined to be perceivable through the AR device 800 by the user wearing the AR device 800, and may be an area including all or at least a part of the display of the AR device 800. In an embodiment, the AR device 800 may include a plurality of transparent members corresponding to the user's both eyes, respectively.

In an embodiment, the AR device 800 may include a display module 814, a camera, an audio output unit, and support parts 821 and 822.

The camera may capture a video corresponding to the user's FoV or may measure a distance to an object. In an embodiment, the camera may be used for head tracking and spatial recognition. In addition, the camera may also recognize a user's movement.

In an embodiment, the camera may further include an 'eye-tracking (ET) camera 812' in addition to a camera 813 that is used to capture a video corresponding to a user's FoV, that is, to detect a movement of an object, or for spatial recognition. In an embodiment, the ET camera 812 may be used for the purpose of detecting and tracking a user's pupil. The ET camera 812 may be used to adjust the center of a virtual video projected on the AR device 800, such that the center is positioned according to the gaze direction of the pupils of a user wearing the AR device 800. For example, a global shutter (GS) camera may be used as the ET camera 812 to detect a pupil and to track fast pupil movements without delay. The ET camera 812 may also separately include a left-eye camera 812-1 and a right-eye camera 812-2.

In an embodiment, the display module 814 may include a first display 830 and a second display 820. A virtual object output through the display module 814 may include information related to an application program executed on the AR device 800 or information related to an external object located in a real space corresponding to an area determined to be a user's FoV. For example, the AR device 800 may identify an external object included in at least a part of video information that is related to a real space and obtained via the camera 813, wherein the at least a part corresponds to an area determined to be a user's FoV. The AR device 800 may output a virtual object related to the external object identified in the at least a part, through an area of a display region of the AR device 800, which is determined to be the user's FoV. The external object may include an object existing in a real space.

In an embodiment, the displays 820 and 830 may each include a condensing lens or a waveguide in a transparent member. For example, the transparent member may be formed of a glass plate, a plastic plate, or a polymer, and may be manufactured to be completely transparent or translucent. In an embodiment, the transparent member may include a first transparent member facing the right eye of a user wearing the AR device 800, and a second transparent member facing the left eye of the user. In a case where the displays are transparent, they may be arranged at positions facing the user's eyes to display a screen.

The waveguide may deliver light generated from a light source of the display, to the user's eyes. For example, the waveguides may be at least partially located on parts of the transparent members, respectively. According to an embodiment, light emitted from the display may be incident on one end of the waveguide, and the incident light may be delivered to the user's eye through total internal reflection within the waveguide. The waveguide may be manufactured with a transparent material such as glass, plastic, or a polymer, and may include a nano-pattern formed on one internal or external surface, for example, a grating structure having a polygonal or curved shape. In an embodiment, the incident light may be propagated or reflected inside the waveguide by the nano-pattern and then provided to the user's eye. In an embodiment, the waveguide may include at least one of a diffractive element (e.g., a diffractive optical element (DOE) or a holographic optical element (HOE)) or a reflective element (e.g., a mirror). In an embodiment, the waveguide may guide display light emitted from a light source unit to the user's eye, by using at least one diffractive element or reflective element.

In an embodiment, the displays 820 and 830 may each include a display panel or a lens (e.g., glass). For example, the display panel may include a transparent material such as glass or plastic. In an embodiment, the display may include a transparent element, and the user may perceive a real space behind the display by looking through the display. The display may display a virtual object on at least a partial region of the transparent element, such that the user sees the virtual object as being superimposed on at least a part of the real space.

In an embodiment, the support parts 821 and 822 may include printed circuit boards (PCBs) 831-1 and 831-2 for delivering an electrical signal to each component of the AR device 800, speakers 832-1 and 832-2 for outputting an audio signal, or batteries 833-1 and 833-2 for supplying power, respectively. For example, in the glasses-type AR device 800, the support parts 821 and 822 may be arranged on temple parts. The support parts 821 and 822 may include hinge parts 840-1 and 840-2 for coupling with a main body of the AR device 800, respectively. The speakers 832-1 and 832-2 may include a first speaker 832-1 for delivering an audio signal to the user's left ear, and a second speaker 832-2 for delivering an audio signal to the user's right ear.

Referring to FIG. 8, the AR device 800 may include a microphone 841 for receiving the user's voice and ambient sound. In addition, the AR device 800 may include at least one light-emitting device (illumination light-emitting diode (LED)) 842 to increase an accuracy of at least one camera (e.g., the ET camera 812, the outward-facing camera 813, or recognition cameras 811-1 and 811-2). For example, the light-emitting device 842 may be used as an auxiliary unit to increase accuracy when photographing the user's pupil with the ET camera 812, and the light-emitting device 842 may use an infrared (IR) LED of an infrared wavelength rather than a visible light wavelength. For example, the light-emitting device 842 may be used as an auxiliary unit when it is difficult to detect a subject due to a dark environment when photographing the user's gesture with the recognition cameras 811-1 and 811-2.

According to an embodiment, the display module 814 may include a first light guide plate corresponding to the right eye, and a second light guide plate corresponding to the left eye, and may provide visual information to the user through the first light guide plate and the second light guide plate. According to an embodiment, the display module 814 may include a display panel and a lens (e.g., a glass lens or a liquid-crystal (LC) lens). The display panel may include a transparent material such as glass or plastic.

According to an embodiment, the display module 814 may include a transparent element, and the user may perceive a real space, which is behind the display module 814 and in front of the user, by looking through the display module 814. The display module 814 may display a virtual object on at least a partial region of the transparent element, such that the user sees the virtual object as being superimposed on at least a part of the real space.

In an embodiment, the AR device 800 may identify an external object included in at least a part of video information that is related to a real space and obtained via the outward-facing camera 813, wherein the at least a part corresponds to an area determined to be a user's FoV. The AR device 800 may output (or display) a virtual object related to the external object identified in the at least a part, through an area of a display region of the AR device 800, which is determined to be the user's FoV. The external object may include an object existing in a real space. According to various embodiments, a display region on which the AR device 800 displays a virtual object may include a part of the display module 814 (e.g., at least a part of the display panel). According to an embodiment, the display region may be an area corresponding to at least a portion of the first light guide plate and the second light guide plate.

According to an embodiment, the AR device 800 may also measure a distance to a physical object located in front of the AR device 800 by using the outward-facing camera 813. The outward-facing camera 813 may include a camera with a high resolution, such as a high-resolution (HR) camera and a photo video (PV) camera.

The AR device 800 according to an embodiment of the present disclosure is not limited to the above-described configuration, and may include various components in various positions and in various numbers.

The present disclosure provides a method, performed by an AR device 100, of providing a guide to a user. A method of operating an AR device 100 may include identifying an action for which a guide is to be provided to the user. The method of operating the AR device 100 may include obtaining, via a camera 120, a real-world scene image. The method of operating the AR device 100 may include generating an AR video corresponding to the action, based on the real-world scene image. The method of operating the AR device 100 may include providing the guide to the user by using the AR video.

In an embodiment, the identifying of the action for which the guide is to be provided to the user may include receiving, from a server, information related to the action, obtaining, via the camera 120, the information related to the action, or obtaining the information related to the action, which is pre-stored in memory 150.

In an embodiment, the identifying of the action for which the guide is to be provided to the user may include obtaining an image including text related to the action, and identifying the action for which the guide is to be provided to the user, by performing NLP on the obtained image.

In an embodiment, the generating of the AR video corresponding to the action based on the real-world scene image may include segmenting the real-world scene image, identifying, from the segmented real-world scene image, at least one object image related to the action, and generating the AR video corresponding to the action, based on position information of the at least one object image within the real-world scene image.

In an embodiment, the method may further include, based on the at least one object image related to the action not being identified from the segmented real-world scene image, outputting a request message for confirmation of unidentified object information.

In an embodiment, the method may further include obtaining user information related to the user. The generating of the AR video may include generating the AR video corresponding to the action, based on the real-world scene image and the user information.

In an embodiment, the obtaining of the user information related to the user may include obtaining, via a sensor 130, the user information related to the user, or obtaining the user information related to the user, which is pre-stored in the memory 150.

In an embodiment, the user information may include at least one of a height, an arm length, a weight, a dominant hand, or information about a physical disability.

In an embodiment, the action for which the guide is to be provided to the user may include a sequence of a plurality of detailed actions having a temporal relationship.

In an embodiment, the providing of the guide to the user by using the AR video may include determining whether the user has completed performing the action for which the guide has been provided, and based on determining that the user has not completed performing the action, repeatedly outputting the AR video at regular intervals.

The present disclosure provides an AR device 100 for providing a guide to a user. The AR device 100 may include a camera 120 configured to obtain a real-world scene image, a display unit 162, memory 150 storing a program including at least one instruction, and at least one processor 140. The at least one processor 140 may be configured to identify an action for which a guide is to be provided to the user, obtain, via the camera 120, the real-world scene image, generate an AR video corresponding to the action, based on the real-world scene image, and provide the guide to the user by using the AR video via the display unit 162.

In an embodiment, the at least one processor 140 may be further configured to receive, from a server via a communication interface 110, information related to the action, obtain, via the camera 120, the information related to the action, or obtain the information related to the action, which is pre-stored in the memory 150.

In an embodiment, the at least one processor 140 may be further configured to obtain an image including text related to the action, and identify the action for which the guide is to be provided to the user, by performing NLP on the obtained image.

In an embodiment, the at least one processor 140 may be further configured to segment the real-world scene image, identify, from the segmented real-world scene image, at least one object image related to the action, and generate the AR video corresponding to the action, based on position information of the at least one object image within the real-world scene image.

In an embodiment, the at least one processor 140 may be further configured to, based on the at least one object image related to the action not being identified from the segmented real-world scene image, output, via an output interface 160, a request message for confirmation of unidentified object information.

In an embodiment, the at least one processor 140 may be further configured to further obtain user information related to the user, and generate the AR video corresponding to the action, based on the real-world scene image and the user information.

In an embodiment, the at least one processor 140 may be further configured to obtain, via a sensor 130, the user information related to the user, or obtaining the user information related to the user, which is pre-stored in the memory 150.

In an embodiment, the user information may include at least one of a height, an arm length, a weight, a dominant hand, or information about a physical disability.

In an embodiment, the action for which the guide is to be provided to the user may include a sequence of a plurality of detailed actions having a temporal relationship.

In an embodiment, the at least one processor 140 may be further configured to determine whether the user has completed performing the action for which the guide has been provided, and repeatedly output, based on determining that the user has not completed performing the action, the AR video at regular intervals.

As described above, according to an embodiment of the present disclosure, in an AR environment where objects of a real-world space and virtual objects coexist, a contextual guide may be effectively provided to the user U by generating an AR video that considers the real-world environment in real time, and providing the AR video to the user U.

Various embodiments of the present disclosure may be implemented or supported by one or more computer programs, which may be produced from computer-readable program code and stored in a computer-readable medium. In the present disclosure, the terms "application" and "program" refer to one or more computer programs, software components, instruction sets, procedures, functions, objects, classes, instances, relevant data, which are suitable for an implementation in computer-readable program code, or a part thereof. The term "computer-readable program code" may include various types of computer code including source code, object code, and executable code. The term "computer-readable medium" may include various types of media that are accessible by a computer, such as ROM, RAM, a hard disk drive (HDD), a compact disc (CD), a digital video disc (DVD), or various types of memory.

In addition, a machine-readable storage medium may be provided in the form of a non-transitory storage medium. Here, the term 'non-transitory storage medium' refers to a tangible device, and may exclude wired, wireless, optical, or other communication links that transmit temporary electrical or other signals. In addition, the term 'non-transitory storage medium' does not distinguish between a case in which data is stored in a storage medium semi-permanently and a case in which data is stored temporarily. For example, a 'non-transitory storage medium' may include a buffer in which data is temporarily stored. A computer-readable medium may be any available medium that is accessible by a computer, and may include a volatile or non-volatile medium and a removable or non-removable medium. The computer-readable medium includes a medium in which data may be permanently stored, and a medium in which data may be stored and overwritten later, such as a rewritable optical disc or an erasable memory device.

Embodiments disclosed herein may be implemented by a software (S/W) program including instructions stored in a computer-readable storage medium. The computer is a device capable of invoking instructions stored in a storage medium and performing operations according to embodiments disclosed herein, and may include an electronic device according to embodiments disclosed herein.

According to an embodiment, methods according to various embodiments disclosed herein may be included in a computer program product and then provided. The computer program product may include a S/W program and a computer-readable recording medium storing the S/W program. For example, the computer program product may include a product in the form of a S/W program electronically distributed (e.g., a downloadable application) through a manufacturer of a device or an electronic market. For electronic distribution, at least part of the S/W program may be stored in a storage medium or temporarily generated. In this case, the storage medium may be a storage medium of a server of the manufacturer or a server of the electronic market, or a relay server that temporarily stores the S/W program.

The computer program product may include a storage medium of a server or a storage medium of a device, in a system consisting of the server and the device. Alternatively, when there is a third device (e.g., a smart phone) communicatively connected to the server or the device, the computer program product may include a storage medium of the third device. Alternatively, the computer program product may include a S/W program itself that is transmitted from the server to the device or the third device, or transmitted from the third device to the device.

In this case, any one of the server, the device, and the third device may execute the computer program product and perform the method according to embodiments disclosed herein. Alternatively, two or more of the server, the device, and the third device may execute the computer program product and perform the method according to embodiments disclosed herein in a distributed manner.

For example, the server (e.g., a cloud server or an Al server) may execute the computer program product stored in the server, and may control the device communicatively connected to the server to perform the method according to embodiments disclosed herein.

As another example, the third device may execute the computer program product to control a device communicatively connected to the third device to perform the method according to an embodiment disclosed herein. When the third device executes the computer program product, the third device may download the computer program product from the server, and execute the downloaded computer program product. Alternatively, the third device may execute the computer program product provided in a preloaded state, and perform the method according to embodiments disclosed herein.

The above descriptions of the present disclosure are provided only for illustrative purposes, and those of skill in the art will understand that the present disclosure may be easily modified into other detailed configurations without modifying technical aspects and essential features of the present disclosure. Therefore, it should be understood that the above-described embodiments are exemplary in all respects and do not limit the scope of the present disclosure. For example, each component described as being unitary may also be implemented in a distributed manner, and similarly, components described as being distributed may be implemented in a combined form.

The scope of the present disclosure is not defined by the detailed description of the present disclosure but by the following claims, and all modifications or alternatives derived from the scope and spirit of the claims and equivalents thereof fall within the scope of the present disclosure.

## Claims

1. A method, performed by an augmented reality device (100), of providing a guide to a user, the method comprising:
identifying an action for which a guide is to be provided to the user;
obtaining, via a camera (120), a real-world scene image;
generating an augmented reality video corresponding to the action, based on the real-world scene image; and
providing the guide to the user by using the augmented reality video.

2. The method of claim 1, wherein the identifying of the action for which the guide is to be provided to the user comprises:
receiving, from a server, information related to the action;
obtaining, via the camera (120), the information related to the action; or
obtaining the information related to the action, which is pre-stored in memory (150).

3. The method of claim 1 or 2, wherein the identifying of the action for which the guide is to be provided to the user comprises:
obtaining an image comprising text related to the action; and
identifying the action for which the guide is to be provided to the user, by performing natural language processing (NLP) on the obtained image.

4. The method of any one of claims 1 to 3, wherein the generating of the augmented reality video corresponding to the action based on the real-world scene image comprises:
segmenting the real-world scene image;
identifying, from the segmented real-world scene image, at least one object image related to the action; and
generating the augmented reality video corresponding to the action, based on position information of the at least one object image within the real-world scene image.

5. The method of claim 4, further comprising, based on the at least one object image related to the action not being identified from the segmented real-world scene image, outputting a request message for confirmation of unidentified object information.

6. The method of any one of claims 1 to 5, further comprising obtaining user information related to the user,
wherein the generating of the augmented reality video comprises generating the augmented reality video corresponding to the action, based on the real-world scene image and the user information.

7. The method of claim 6, wherein the obtaining of the user information related to the user comprises:
obtaining, via a sensor (130), the user information related to the user; or
obtaining the user information related to the user, which is pre-stored in the memory (150).

8. The method of claim 6 or 7, wherein the user information comprises at least one of a height, an arm length, a weight, a dominant hand, or information about a physical disability.

9. The method of any one of claims 1 to 8, wherein the action for which the guide is to be provided to the user comprises a sequence of a plurality of detailed actions having a temporal relationship.

10. The method of any one of claims 1 to 9, wherein the providing of the guide to the user by using the augmented reality video comprises:
determining whether the user has completed performing the action for which the guide has been provided; and
based on determining that the user has not completed performing the action, repeatedly outputting the augmented reality video at regular intervals.

11. An augmented reality device (100) for providing a guide to a user, the augmented reality device (100) comprising:
a camera (120) configured to obtain a real-world scene image;
a display unit (162);
memory (150) storing a program comprising at least one instruction; and
at least one processor (140),
wherein the at least one processor (140) is configured to identify an action for which a guide is to be provided to the user, obtain, via the camera (120),
the real-world scene image, generate an augmented reality video corresponding to the action, based on the real-world scene image, and provide the guide to the user by using the augmented reality video via the display unit (162).

12. The augmented reality device (100) of claim 11, wherein the at least one processor (140) is further configured to segment the real-world scene image, identify, from the segmented real-world scene image, at least one object image related to the action, and generate the augmented reality video corresponding to the action, based on position information of the at least one object image within the real-world scene image.

13. The augmented reality device (100) of claim 12, wherein the at least one processor (140) is further configured to, based on the at least one object image related to the action not being identified from the segmented real-world scene image, output, via an output interface (160), a request message for confirmation of unidentified object information.

14. The augmented reality device (100) of any one of claims 11 to 13, wherein the action for which the guide is to be provided to the user comprises a sequence of a plurality of detailed actions having a temporal relationship.

15. The augmented reality device (100) of any one of claims 11 to 14, wherein the at least one processor (140) is further configured to determine whether the user has completed performing the action for which the guide has been provided, and repeatedly output, based on determining that the user has not completed performing the action, the augmented reality video at regular intervals.
